# FASCICULE DE BREVET EUROPEEN

(11) **EP 2 433 868 B1**
(45) Date de publication et mention de la délivrance du brevet: **11.11.2015**
(21) Numéro de dépôt: 11007542.1
(22) Date de dépôt: 15.09.2011
(51) Int. Cl.: B64D 15/16

(54) **Système de dégivrage amélioré pour voilure fixe ou tournante d'un aéronef**
Verbessertes Enteisungssysem für feststehende oder drehbare Tragflächen eines Flugzeugs
Improved de-icing system for a fixed or rotary wing of an aircraft

(30) Priorité: 28.09.2010 FR 1003827
(43) Date de publication de la demande: 28.03.2012
(73) Titulaire: Airbus Helicopters, 13725 Marignane Cedex (FR)
(72) Inventeur: Chuc, Charles, 13012 Marseille (FR); Imbert, Nicolas, 13008 Marseille (FR)
(74) Mandataire: Pouillot, Laurent Pierre Paul

(56) Documents cités:
- FR-A1- 2 908 738
- US-A- 4 732 351

## Description

La présente invention se rapporte au domaine technique général du dégivrage de structures d'un aéronef et notamment des voilures fixes ou tournantes.

L'invention concerne plus particulièrement le dégivrage par ultrasons, c'est-à-dire la transmission de vibrations mécaniques ultrasonores sur une structure à dégivrer et/ou le cas échéant à nettoyer. En plus du givre, les structures précitées peuvent également être recouvertes d'un dépôt de poussières qu'il convient d'éliminer.

La présente invention fera référence principalement à des aéronefs du genre giravions, et notamment des hélicoptères, mais elle trouve son application avec tous types d'aéronefs à voilure fixe ou tournante.

Il existe déjà différentes technologies de dégivreurs. On connaît ainsi les dégivreurs électrothermiques utilisés sur les hélicoptères. Ces dégivreurs comportent des résistances électriques noyées dans le bord d'attaque des pales. Les résistances électriques transforment par effet Joule l'énergie électrique qui leur est fournie en chaleur. Cette chaleur permet d'élever la température du bord d'attaque au-delà des températures favorables à la formation de givre.

Ces dégivreurs présentent cependant un certain nombre d'inconvénients en particulier pour l'application aux giravions du genre hélicoptères. En effet, ces dégivreurs consomment une puissance électrique élevée, par exemple comprise entre 10 et 40 kW. Ces dégivreurs sont aussi lourds et volumineux, en raison de la puissance électrique élevée qui est nécessaire à leur fonctionnement. Ces dégivreurs ne peuvent pas, dans ces conditions, être installés sur des petites machines. En outre, ces dégivreurs nécessitent l'utilisation d'un collecteur à balais comportant de nombreuses pistes électriques. Ces dégivreurs constituent donc des systèmes complexes et très coûteux.

Ces dégivreurs sont aussi plus lourds, à cause de la partie commande, c'est à dire l'ensemble de l'électronique de pilotage résidant en référentiel non tournant.

Par ailleurs, ces dégivreurs peuvent conduire en cas de dérive de la commande électrothermique, à une dérive en température et par conséquent à un délaminage du bord d'attaque. Il est bien entendu possible de répondre à ce problème en utilisant un dispositif de protection thermique noyé dans la pale. Un tel dispositif de protection supplémentaire augmente substantiellement le coût du dégivreur ainsi que la masse embarquée, ce qui n'est pas souhaitable.

Il a aussi été proposé par le document FR 2 908 738 (AIRBUS FRANCE) de placer des générateurs de vibrations sur le bord d'attaque d'un aéronef, tel que par exemple l'entrée d'air d'une nacelle d'un ensemble propulsif. Le bord d'attaque comprend un revêtement acoustique composé d'une couche acoustiquement résistive, une structure alvéolaire et une couche réflectrice. Les moyens générateurs de vibrations sont par exemple placés dans un logement ménagé par une déformation en creux de la couche acoustiquement résistive, ledit logement étant fermé par un couvercle.

De telles modalités d'implantation des moyens générateurs de vibrations sur le bord d'attaque ne sont pas satisfaisantes, notamment en raison d'un maintien douteux des moyens générateurs de vibrations dans les logements qui les reçoivent et d'une fragilisation du revêtement acoustique pouvant conduire à son délaminage.

On connaît également des dégivreurs à ultrasons pour procéder au dégivrage d'une structure en cisaillant la glace grâce aux dits ultrasons. Un exemple de principe général de fonctionnement de tels dégivreurs est par exemple décrit dans le document US 2010/0031972. Ce document décrit notamment l'utilisation d'actionneurs piézoélectriques ainsi que leurs modes d'excitation pour obtenir une efficacité maximale pour transmettre des ondes ultrasonores sans affecter la structure à dégivrer.

Ces dégivreurs, par exemple à base d'éléments céramiques, présentent l'inconvénient de ne pas pouvoir être intégrés dans des structures du genre bord d'attaque de pales d'hélicoptère. En effet, les bords d'attaque sont en général fixés mécaniquement de manière très rigide et intégralement sur une structure de base et les colles assurant le maintien desdits bords d'attaque verrouilleraient les éléments vibrants, les empêchant ainsi de transmettre leur énergie. La disposition des dégivreurs au voisinage des surfaces à dégivrer est également problématique du fait d'un manque d'espace disponible sous le bord d'attaque.

Un autre inconvénient des dégivreurs à ultrasons est lié à leur intégration dans des pales. Les câblages volants, induits pour la connexion de ces actionneurs, vont créer des volumes d'air non contrôlés ainsi que des zones où la colle ou la résine n'aura pas polymérisé. Des parties exothermiques peuvent également apparaître lors de la fabrication des pales.

Tous ces inconvénients augmentent le risque de perte du bord d'attaque en vol, constituant une situation catastrophique pour l'hélicoptère.

Par ailleurs, il faut noter que les éléments céramiques utilisés dans les dégivreurs à ultrasons connus, doivent être précontraints.

On précontraint les céramiques pour les protéger vis-à-vis de certains efforts auxquels elles sont particulièrement sensibles (efforts de type torsion et de manière générale tout ce qui est en dehors de ces axes principaux). De plus la précontrainte leur permet de ne pas dépasser leurs limites mécaniques en fonctionnement, qui peuvent endommager les céramiques si lesdites limites étaient dépassées.

La présente invention a pour alors objet de proposer un nouveau système de dégivrage permettant de s'affranchir des limitations mentionnées.

L'objet de la présente invention vise par conséquent à intégrer un système de dégivrage à ultrasons dans une voilure, par exemple une pale de rotor, sans pour autant fragiliser la fixation d'un bord d'attaque.

Un autre objet de la présente invention vise à proposer un nouveau système de dégivrage permettant de simplifier les opérations d'intégration dudit système dans une structure du genre pale de rotor principal ou dans une voilure fixe.

Un autre objet de la présente invention vise à proposer un nouveau système de dégivrage permettant de diminuer sensiblement la masse embarquée correspondante et son coût.

Les objets assignés à l'invention sont atteints à l'aide d'un système de dégivrage équipant un élément de voilure fixe ou tournante d'aéronef et comportant des moyens pour générer des ultrasons lesquels sont transmis au moins localement à une surface externe de l'élément de voilure. L'élément de voilure comporte une structure de base recouverte au moins localement avec au moins un bord d'attaque.

Les moyens pour générer des ultrasons sont disposés dans des logements ouverts en direction du bord d'attaque pour générer des ondes ultrasonores dont la propagation selon au moins une direction s'effectue sensiblement parallèlement à la surface externe de la voilure. Un câblage relie les moyens pour générer des ultrasons à une unité de commande et d'alimentation électrique. Des moyens de fixation fixent le bord d'attaque à la structure de base.

Selon la présente invention, l'élément de voilure est caractérisé en ce que lesdits moyens pour générer des ultrasons sont constitués d'actionneurs piézoélectriques. L'élément de voilure comporte une structure de maintien desdits actionneurs piézoélectriques. La structure de maintien est disposée et immobilisée entre la structure de base et le bord d'attaque. La structure de maintien comporte des cellules et est ajourée pour comprendre des espaces libres entre lesdites cellules. Chaque cellule délimite un dit logement et lesdits actionneurs piézoélectriques sont disposés dans au moins un certain nombre de logements. Lesdits moyens de fixation fixent le bord d'attaque auxdits actionneurs piézoélectriques disposés dans leurs logements respectifs.

Les espaces libres traversent par exemple de part en part la structure de maintien en étant ouvert vers le bord d'attaque et vers la structure de base, alors que les logements sont borgnes en étant ouvert uniquement vers le bord d'attaque et non pas vers la structure de base.

Par suite, on peut noyer la structure de maintien dans une résine polymérisable en disposant ladite résine notamment dans les espaces libres.

Selon un exemple de réalisation conforme à l'invention, la structure de maintien est en élastomère.

La structure de maintien est avantageusement réalisée avec un matériau pouvant réaliser une précontrainte sur les éléments piézoélectriques. Ceci est particulièrement le cas pour l'élastomère. Dès lors, la structure de maintien est précontrainte pour exercer des efforts sur les éléments piézoélectriques.

Selon un exemple de réalisation conforme à l'invention, la structure de maintien, la structure de base et le bord d'attaque sont solidarisés à l'aide d'une résine polymérisable. Par exemple, la résine polymérisable est disposée dans les espaces vides, entre la structure de maintien et la structure de base, et entre la structure de maintien et le bord d'attaque.

Selon un exemple de réalisation conforme à l'invention, la structure en élastomère définit des cellules comportant chacune un logement destiné à loger un actionneur piézoélectrique. Les actionneurs piézoélectriques sont par exemple collés dans les logements voire au bord d'attaque.

Selon un exemple de réalisation conforme à l'invention, la structure en élastomère comprend une première couche ajourée solidaire de la structure de base par l'intermédiaire de la résine polymérisable et une seconde couche ajourée solidaire de la première couche par l'intermédiaire d'un moyen de liaison du type film de colle, les logements pour les actionneurs piézoélectriques étant prévus dans ladite seconde couche. La résine peut aussi contribuer à la solidarisation des deux couches.

Selon un exemple de réalisation conforme à l'invention, les cellules sont indépendantes et reliées entre elles par la résine polymérisable et par le bord d'attaque.

Selon un exemple de réalisation conforme à l'invention, les cellules sont reliées entre elles au niveau de la première couche d'élastomère, par des ponts de liaison en élastomère faisant partie intégrante de ladite première couche.

Selon un exemple de réalisation conforme à l'invention, les cellules présentent une forme hexagonale.

Selon un exemple de réalisation conforme à l'invention, des espaces libres subsistant entre les cellules sont remplis avec la résine polymérisable.

Selon un exemple de réalisation conforme à l'invention, le bord d'attaque présente sur sa face intérieure des plots en saillie, engagés dans la résine polymérisable contenue dans des espaces libres.

Selon un exemple de réalisation conforme à l'invention, le bord d'attaque est en une ou en plusieurs parties de manière à recouvrir une zone continue ou des zones discontinues de la voilure.

Selon un exemple de réalisation conforme à l'invention, les moyens de fixation du bord d'attaque sont des moyens de collage réalisant une liaison par collage avec les actionneurs piézoélectriques disposés dans leurs logements respectifs.

Selon un exemple de réalisation conforme à l'invention, le bord d'attaque est également collé sur la seconde couche de la structure en élastomère avec laquelle il est en contact.

Selon un autre exemple de réalisation conforme à l'invention, les moyens de fixation du bord d'attaque comprennent des éléments de fixation souple solidaires de la structure de base et réalisés avec un matériau du genre néoprène ou silicone, sur lesquels sont fixées par collage les extrémités du bord d'attaque, la structure de base présentant au regard du bord d'attaque un dégagement de matière de manière à délimiter un intervalle libre dans lequel sont disposés des actionneurs piézoélectriques.

Selon un exemple de réalisation conforme à l'invention, le système de dégivrage s'étend également sous une paroi extérieure de la voilure qui est dépourvue de bord d'attaque. Une telle solution est avantageuse dans la mesure où une partie de la captation du givre se fait sur l'intrados et entraine dans une moindre mesure des pertes de performances. Il peut donc être intéressant d'étendre le système de protection à cette zone.

Selon un exemple de réalisation conforme à l'invention, le câblage est effectué sur la voilure soit par zones distinctes lorsque le bord d'attaque comporte une partie distincte pour chacune des zones, soit de façon globale sur une zone unique lorsque le bord d'attaque est en un seul tenant sur cette zone. Cela permet de piloter le système différemment. Un câblage global entraine une mise en fonctionnement de l'ensemble du système alors qu'il est peut être intéressant de gérer le dégivrage par zones dans le temps. Cette solution est particulièrement avantageuse si la consommation du système global est trop importante.

Selon un exemple de réalisation conforme à l'invention, les actionneurs piézoélectriques sont constitués d'éléments céramiques présentant une forme sensiblement cylindrique du genre disque. On obtient ainsi une propagation des ondes ultrasonores sensiblement isotrope dans un plan parallèle à la surface extérieure de la voilure.

Alternativement, si l'on recherche une propagation plus marquée dans une ou plusieurs directions, il est possible d'utiliser des éléments céramiques de forme différente.

Les objets assignés à l'invention sont également atteints à l'aide d'une pale de rotor principal pour giravion comportant un système de dégivrage conformément à l'invention.

Les objets assignés à l'invention sont également atteints à l'aide d'un élément mobile d'une voilure fixe d'aéronef du genre volet comportant un système de dégivrage conformément à l'invention.

Le système de dégivrage conforme à l'invention présente l'avantage d'être économe sur le plan de la puissance électrique consommée. En outre, le système ne présente pas de risques d'apparition d'échauffements localisés qui sont préjudiciables à la cohésion mécanique de la voilure.

Le système de dégivrage conforme à l'invention présente également un encombrement réduit et une masse embarquée réduite, notamment par l'optimisation du câblage et des moyens de commande associés. L'organisation du câblage par exemple selon une conception matricielle permet de s'adapter au mieux à la forme des cavités logeant les actionneurs. Un tel câblage permet de sélectionner un ou plusieurs actionneurs piézoélectriques à des fins d'alimentation. Un tel câblage permet de réduire la quantité de câbles par rapport à une connectique individuelle de chaque actionneur piézoélectrique.

Un autre avantage du système de dégivrage conforme à l'invention réside dans le fait qu'une défaillance d'un ou de plusieurs actionneurs piézoélectriques n'altère pas l'efficacité du système de dégivrage dans son ensemble. On peut en effet définir un pourcentage d'actionneurs défaillants en deçà duquel l'efficacité du dégivrage n'est pas affectée.

Contrairement aux attentes, il est remarquable de constater que le bord d'attaque, ne doit pas être collé intégralement sur une surface porteuse et que la libération d'un certain pourcentage de sa surface n'est pas préjudiciable à la solidité de sa fixation. Selon un exemple de réalisation, ce pourcentage peut atteindre au moins 30%.

L'invention présente également un avantage au niveau de la maintenance grâce à un démontage facilité.

L'invention et ses avantages apparaîtront avec plus de détails dans le cadre de la description qui suit avec un exemple de réalisation donné à titre illustratif en référence aux figures annexées qui représentent :
- la figure 1, une vue en coupe d'un exemple de réalisation d'un système de dégivrage conforme à l'invention, intégré dans un élément de voilure d'aéronef,
- la figure 2, une vue en coupe d'un autre exemple de réalisation d'un système de dégivrage conforme à l'invention, intégré dans un élément de voilure d'aéronef,
- la figure 3, une vue partielle de dessus d'une partie d'un système de dégivrage de la figure 1,
- la figure 4, une autre vue partielle de dessus d'une partie d'un système de dégivrage de la figure 1,
- la figure 5, une vue partielle de dessus d'un détail agrandi du système de dégivrage conforme à l'invention,
- la figure 6, une vue de dessus d'une pale pour rotor principal d'hélicoptère comportant un système de dégivrage conforme à l'invention,
- la figure 7, une vue en coupe transversale d'un exemple de réalisation de la pale de la figure 6, comportant un système de dégivrage conforme à l'invention,
- la figure 8, une vue en coupe transversale d'un autre exemple de réalisation de la pale de la figure 6, comportant un système de dégivrage conforme à l'invention,
- la figure 9, une vue en coupe transversale d'un autre exemple de réalisation d'une pale comportant un système de dégivrage conforme à l'invention,
- et la figure 10, une vue en coupe d'un exemple de réalisation supplémentaire d'un système de dégivrage conforme à l'invention, intégré dans un élément de voilure d'aéronef.

Les éléments structurellement et fonctionnellement identiques, présents sur plusieurs figures distinctes, sont affectés d'une seule et même référence numérique ou alphanumérique.

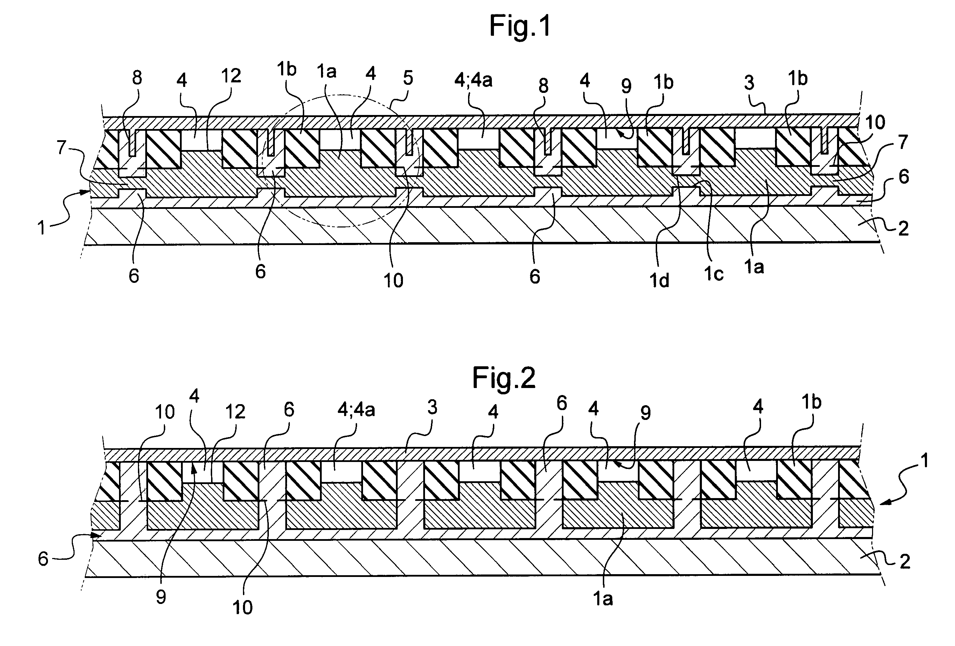

La figure 1 est une vue en coupe d'un exemple de réalisation d'un système de dégivrage conforme à l'invention, intégré dans un élément de voilure d'aéronef.

Le système de dégivrage comporte une structure de maintien en élastomère 1 ajourée, disposée et immobilisée entre une structure de base 2 et un bord d'attaque 3. La structure de base 2 est avantageusement une structure à base de fibres longitudinales du groupe des matériaux composites.

Des logements 4 sont délimités dans la structure en élastomère 1 et ouverts en direction du bord d'attaque 3.

Selon un exemple de réalisation conforme à l'invention, la structure de maintien en élastomère 1 définit des cellules 5 individualisées comportant chacune un logement 4 et pour y loger un actionneur piézoélectrique 4a.

Avantageusement, des actionneurs piézoélectriques sont disposés dans au moins un certain nombre de logements 4 pour générer des ultrasons.

Selon un exemple de réalisation conforme à l'invention, la structure en élastomère 1, la structure de base 2 et le bord d'attaque 3 sont solidarisés ensembles à l'aide d'une résine polymérisable 6.

La structure en élastomère 1 comprend par exemple une première couche 1a ajourée solidaire de la structure de base 2 par l'intermédiaire d'un film de colle et une seconde couche 1b ajourée solidaire de la première couche 1a par l'intermédiaire de ladite résine 6. Les logements 4 pour les actionneurs piézoélectriques 4a sont de préférence prévus dans ladite seconde couche 1b.

Selon un exemple de réalisation conforme à l'invention, les cellules 5 sont reliées entre elles au niveau de la première couche 1a d'élastomère, par des ponts de liaison 7 en élastomère faisant partie intégrante de ladite première couche 1a.

La première couche 1a présente avantageusement des rainures 1c et 1d au niveau des interfaces des cellules 5, permettant ainsi un meilleur accrochage avec la résine 6. Ces rainures 1c,1d constituent des zones à épaisseur réduite pour obtenir une cohérence géométrique pour l'ensemble des ponts de liaison 7, d'autant qu'il est envisagé d'usiner un grand bloc de matière élastomère pour obtenir la première couche 1a. On peut aussi profiter de ces zones pour y faire passer le câblage et éviter ainsi que le câblage assure une cohésion mécanique entre différents éléments.

Selon un autre exemple de réalisation conforme à l'invention et illustré à la figure 2, les cellules 5 sont indépendantes et reliées entre elles uniquement par la résine polymérisable 6 et par le bord d'attaque 3. L'exemple de réalisation illustré à la figure 2, présente donc une première couche 1a dépourvue de ponts de liaison 7.

Selon un exemple de réalisation conforme à l'invention, des espaces libres 1e subsistant entre les cellules 5 sont remplis avec la résine 6 polymérisable.

Selon un exemple de réalisation conforme à l'invention et illustré à la figure 1, le bord d'attaque 3 présente sur sa face intérieure des plots 8 en saillie, engagés dans la résine 6 polymérisable contenue dans des espaces libres 1 e délimités entre les cellules 5.

Dans l'exemple de la réalisation de la figure 2, le bord d'attaque 3 est dépourvu de plots 8.

Le système de dégivrage conforme à l'invention comporte également des moyens de collage 9 pour fixer le bord d'attaque 3 sur les actionneurs piézoélectriques 4a disposés dans leurs logements 4 respectifs. Les actionneurs piézoélectriques 4a sont recouverts par exemple d'un film de colle, du genre époxy, sur leur surface en contact avec le bord d'attaque 3.

Un câblage 10 reliant les actionneurs piézoélectriques à une unité de commande et d'alimentation électrique est également installé de manière connue. Chaque actionneur est connecté. Les câbles sont plus ou moins noyés dans les différents élastomères pour être protégés lors de la manipulation, lors de l'installation et une fois en service. La partie commande/alimentation est déportée et ne fait pas partie intégrante de la pale. Le câblage noyé dans l'élastomère, est de ce fait protégé de certaines vibrations. Sa fiabilité est ainsi améliorée.

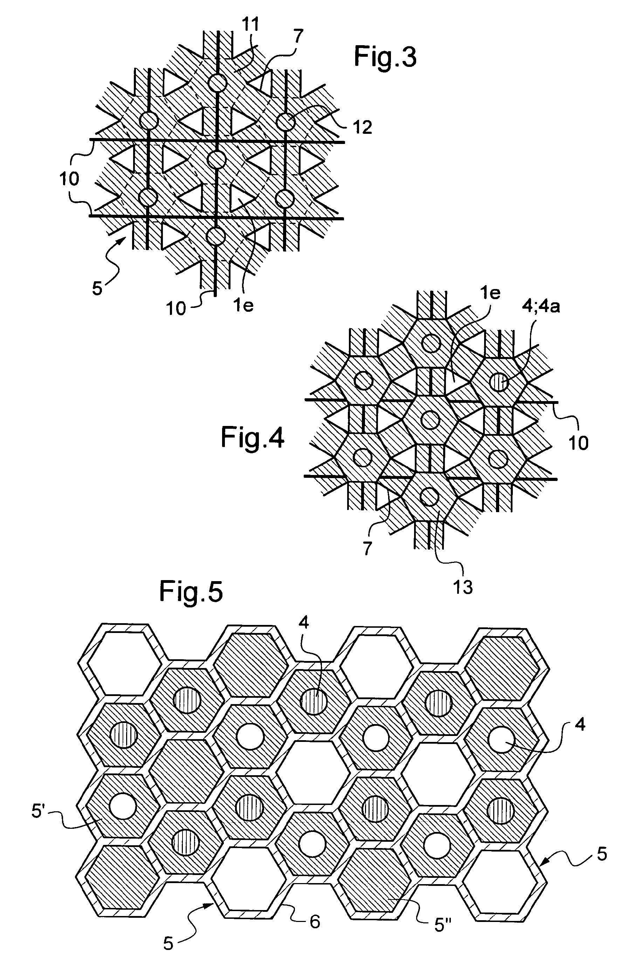

La figure 3 correspond à une vue partielle de dessus d'une partie d'un système de dégivrage de la figure 1, qui montre plus particulièrement la première couche 1a et le câblage 10.

Selon un exemple de réalisation conforme à l'invention, les cellules 5 présentent une forme hexagonale. La première couche 1a présente donc des éléments hexagonaux 11 sous forme de rehaussements, présentant chacun une partie sur élevée centrale 12 sensiblement circulaire délimitant le fond du logement 4 correspondant. Les éléments hexagonaux 11 sont reliés entre eux par les ponts de liaison 7 en élastomère.

Les espaces libres 1e sont destinés à être remplis par la résine 6 et la première couche 1a avec les ponts de liaison 7 ce qui permet de réduire substantiellement les tensions exercées sur le câblage 10 déposé sur ladite première couche 1 a.

La figure 4 est une autre vue partielle de dessus d'une partie d'un système de dégivrage de la figure 1. La figure 4 montre des éléments hexagonaux complémentaires 13 identiques aux éléments hexagonaux 11. Ces éléments hexagonaux complémentaires 13 sont déposés, le cas échéant collés, sur les éléments hexagonaux 11 de manière à délimiter la périphérie des logements 4. A cet effet les éléments hexagonaux complémentaires 13 présentent une ouverture centrale traversante et circulaire pour être engagés sur les parties centrales sur élevées 12. Les éléments hexagonaux complémentaires 13 constituent donc la seconde couche 1b en élastomère. La couche en élastomère 1 peut donc être assimilée à une structure du genre nid d'abeilles à deux couches 1a, 1b superposées.

Les éléments hexagonaux complémentaires 13 assurent d'une part une précontrainte de l'actionneur piézoélectrique 4a du genre céramique et d'autre part le support et la protection par l'amortissement des vibrations du câblage et des connexions.

La céramique et son câblage sont installés de préférence avant de compléter l'assemblage avec une seconde couche 1b en élastomère.

L'objectif préférentiel est de créer des ondes sensiblement isotropes et au moins parallèle à la surface sur laquelle on vient placer les actionneurs piézoélectriques 4a.

A titre de variante, les cellules 5 pourraient également présenter une forme différente, par exemple rectangulaire ou triangulaire sans sortir du cadre de l'invention.

La figure 5 est une vue partielle de dessus d'un détail agrandi du système de dégivrage conforme à l'invention. Dans cet exemple de réalisation, le système de dégivrage conforme à l'invention comporte différents types de cellules 5.

Certaines cellules 5' ne comportent ainsi pas d'actionneur piézoélectrique et constituent de ce fait des cellules 5 inactives. On utilise ces cellules 5 ne comportant pas d'actionneur piézoélectrique, uniquement comme cavités de résonance qui fonctionnent uniquement lorsque les cellules 5 actives voisines fonctionnent. Cela peut correspondre par exemple à des zones où l'on sait que la glace ne peut pas se former, en tout cas pas de manière critique, ou qu'elle se détache facilement, ou que les ondes se transmettent bien.

En outre, il est possible de prévoir des moyens de remplissage 5" de type cellules ne délimitant pas un logement.

Selon un exemple de réalisation du système de dégivrage conforme à l'invention, on peut envisager d'utiliser un bord d'attaque 3 conducteur électriquement ainsi qu'une colle conductrice à l'interface dudit bord d'attaque 3 et des actionneurs piézoélectriques. Le bord d'attaque 3 peut ainsi constituer la masse électrique commune pour l'ensemble ou une partie des actionneurs piézoélectriques 4a. Ceci permet de réduire substantiellement la masse embarquée de câblage 10.

En outre, les actionneurs piézoélectriques peuvent être assimilés à des charges capacitives. En séparant lesdits actionneurs en blocs distincts, chaque bloc peut également être assimilé à une charge capacitive. Un bloc peut ainsi se charger électriquement puis se décharger dans un autre bloc. Une partie de l'énergie électrique mise en jeu pourrait ainsi être récupérée et économisée.

Dans une réalisation se basant sur des zones distinctes, on pourrait ainsi activer une zone, qui emmagasinerait de l'énergie en se déformant et la restituerait en partie à la zone voisine, en revenant à sa position initiale. Il serait alors possible d'économiser une partie de l'énergie stockée et non utilisée.

Selon un autre exemple de réalisation conforme à l'invention, le bord d'attaque 3 est également collé sur la seconde couche 1b de la structure en élastomère 1 avec laquelle il est en contact.

Selon un exemple de réalisation conforme à l'invention, le système de dégivrage s'étend également sous une paroi extérieure de la voilure, non représentée, qui est dépourvue de bord d'attaque 3. On peut ainsi protéger au moins une partie de l'intrados contre la formation de glace.

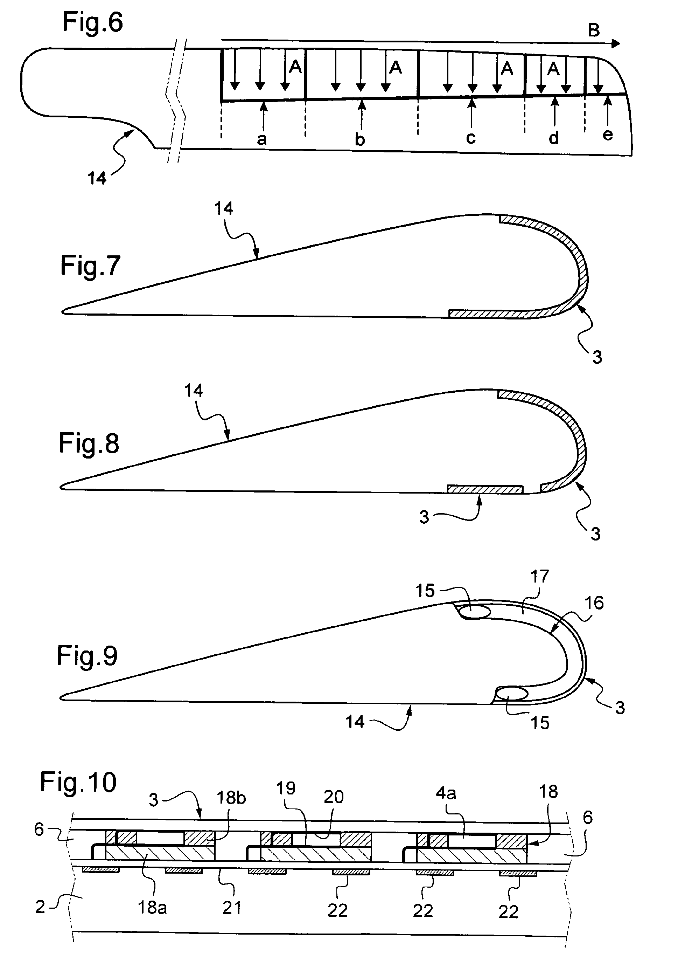

La figure 6 est une vue de dessus d'une pale 14 pour rotor principal d'hélicoptère comportant un système de dégivrage conforme à l'invention.

Selon un exemple de réalisation conforme à l'invention, le câblage 10 est effectué sur la voilure soit par zones distinctes selon une direction A transversale lorsque le bord d'attaque 3 comporte une partie distincte pour chacune des zones a, b, c, d, e, soit de façon globale selon une direction B longitudinale sur une zone unique lorsque le bord d'attaque 3 est en un seul tenant sur cette zone.

Il s'agit de gérer localement et temporellement le dégivrage par zones (a, b, c, d, e). Le choix est à faire en fonction de la consommation de l'ensemble des actionneurs.

Selon un exemple de réalisation conforme à l'invention, le bord d'attaque 3 est en une ou en plusieurs parties de manière à recouvrir une zone continue ou des zones discontinues de la voilure.

La figure 7 est ainsi une vue en coupe transversale d'un exemple de réalisation de la pale 14 de la figure 6, comportant un système de dégivrage conforme à l'invention, associé à un bord d'attaque 3 en une seule partie. Chacune des zones a, b, c, d, e peut ainsi être pourvue d'un tel bord d'attaque 3.

La figure 8 est une vue en coupe transversale d'un autre exemple de réalisation de la pale 14 de la figure 6, comportant un système de dégivrage conforme à l'invention associé à un bord d'attaque 3 en deux parties distinctes. Chaque partie distincte du bord d'attaque 3 comporte par exemple un système de dégivrage. Chacune des zones a, b, c, d, e peut ainsi être pourvue d'un bord d'attaque 3 de ce type.

Selon un exemple de réalisation conforme à l'invention, les actionneurs piézoélectriques 4a sont constitués d'éléments céramiques présentant une forme sensiblement cylindrique du genre disque. Une électrode connectée au dessus et une autre électrode connectée en dessous des éléments céramiques, permettent de relier lesdits éléments au câblage 10 d'ensemble. Ce dernier comprend par exemple des lignes de transmission associées à des connecteurs appropriés.

La forme circulaire des éléments céramiques constituant les actionneurs électriques, permet d'obtenir une propagation isotrope des ondes ultrasonores dans au moins un plan parallèle à la surface extérieure de la voilure et notamment au bord d'attaque 3.

Lors d'un exemple de montage du système de dégivrage conforme à l'invention, après l'installation de la première couche 1a sur un plan de travail, on installe les actionneurs piézoélectriques 4a avec le câblage 10, puis on met en place la seconde couche 1b avec l'interposition d'un film de colle. On positionne ensuite sur le tout, le bord d'attaque 3 avec l'interposition d'un film de colle au moins au niveau des actionneurs. L'ensemble ainsi réalisé est alors rapporté sur la structure de la pale et on injecte la résine 6 dans les espaces libres 1e de façon à ce que ladite résine 6 assure par collage une liaison mécanique entre le bord d'attaque 3, la structure de maintien 1 et la structure de la pale.

Selon un exemple de réalisation illustré par la figure 9, les moyens de fixation du bord d'attaque 3 comprennent des éléments de fixation souples 15 solidaires de la structure de base 2 et réalisés avec un matériau du genre néoprène ou silicone. Les extrémités du bord d'attaque 3 sont fixées par collage sur ces éléments de fixation souples 15. La structure de base 2 de la pale 14 présente au regard du bord d'attaque 3 un dégagement de matière 16 de manière à délimiter un intervalle libre 17 dans lequel sont disposés des actionneurs piézoélectriques. Un tel assemblage permet de monter le bord d'attaque 3 suivant une configuration dite flottante.

Les éléments de fixation souples 15 sont avantageusement recouverts par le bord d'attaque 3 de manière à éviter une abrasion desdits éléments de fixation souples 15.

Selon un autre exemple de réalisation du système de dégivrage conforme à l'invention, illustré par exemple à la figure 10, la structure de maintien 1 est constituée d'un ensemble de blocs individuels 18 comportant chacun un élément piézoélectrique 4a au moins partiellement noyé dans un matériau desdits blocs individuels qui lui sert de précontrainte. Les espaces localisés entre les blocs individuels 18 sont remplis de résine 6 et le bord d'attaque 3 est avantageusement collé sur les surfaces libres des éléments piézoélectriques 4a. A cette fin, chaque bloc individuel 18 est avantageusement constitué d'une partie inférieure 18a et d'une partie supérieure 18b ouverte en regard du bord d'attaque 3.

La connectique comprend des fils de connexion 19,20 reliant chaque élément piézoélectrique 4a à un harnais de connexion 21 collé via des zones de collage 22 sur la structure de base 2. Ainsi, lors du montage du système de dégivrage, il suffit de connecter chaque bloc individuel 18 sur le harnais de connexion 21 et de fixer le tout par le biais de la résine 6.

Le système de dégivrage conforme à l'invention permet par exemple de générer une onde ultrasonore dont la fréquence est comprise de préférence entre 5 Hz et 100 kHz, à travers un milieu constitué du bord d'attaque 3 et de givre ou de glace ou de poussières. Les actionneurs piézoélectriques vont créer une contrainte de cisaillement à l'interface du bord d'attaque 3 et du givre ou de la glace, supérieure à 1,5 MPa, correspondant à la force d'adhésion moyenne en cisaillement de la glace sur une surface métallique (aluminium, titane, acier et autres).

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par le texte des revendications.

## Revendications

1. Elément de voilure fixe ou tournante d'aéronef équipé d'un système de dégivrage comportant des moyens pour générer des ultrasons lesquels sont transmis au moins localement à une surface externe de l'élément de voilure, lequel comporte une structure de base (2) recouverte au moins localement avec au moins un bord d'attaque (3), les moyens pour générer des ultrasons étant disposés dans des logements (4) ouverts en direction du bord d'attaque (3) pour générer des ondes ultrasonores dont la propagation selon au moins une direction s'effectue sensiblement parallèlement à la surface externe, un câblage (10) reliant les moyens pour générer des ultrasons à une unité de commande et d'alimentation électrique, des moyens de fixation fixant le bord d'attaque (3) à la structure de base (2), **caractérisé en ce que** lesdits moyens pour générer des ultrasons sont constitués d'actionneurs piézoélectriques (4a), les moyens de fixation comportant une structure de maintien (1) sur la structure de base (2) des actionneurs piézoélectriques (4a), la structure de maintien (1) étant disposée et immobilisée entre la structure de base (2) et le bord d'attaque (3) qui recouvre les actionneurs piézoélectriques (4a), la structure de maintien (1) comportant des cellules (5) et étant ajourée pour comprendre des espaces libres (1e) entre lesdites cellules (5), chaque cellule délimitant un dit logement (4) et lesdits actionneurs piézoélectriques (4a) étant disposés dans au moins un certain nombre de logements (4), lesdits moyens de fixation fixant le bord d'attaque auxdits actionneurs piézoélectriques (4a) disposés dans leurs logements (4) respectifs.

2. Elément de voilure d'aéronef selon la revendication 1,
**caractérisé en ce que** la structure de maintien (1) est en élastomère.

3. Elément de voilure d'aéronef selon la revendication 1,
**caractérisé en ce que** la structure de maintien (1) est précontrainte pour exercer des efforts sur les actionneurs piézoélectriques (4a).

4. Elément de voilure d'aéronef selon l'une quelconque des revendications 1 à 3, **caractérisé en ce que** la structure de maintien (1), la structure de base (2) et le bord d'attaque (3) sont solidarisés à l'aide de films de colle.

5. Elément de voilure d'aéronef selon la revendication 2,
**caractérisé en ce que** la structure de maintien (1) en élastomère comprend une première couche (1a) ajourée solidaire de la structure de base (2) par l'intermédiaire d'une résine (6) polymérisable et une seconde couche (1 b) ajourée, solidaire de la première couche (1a) par l'intermédiaire d'un moyen de liaison du type film de colle, les logements (4) pour les actionneurs piézoélectriques (4a) étant prévus dans ladite seconde couche (1 b).

6. Elément de voilure d'aéronef selon la revendication 1,
**caractérisé en ce que** les cellules (5) sont structurellement indépendantes et reliées entre elles par une résine (6) polymérisable et par le bord d'attaque (3), ladite résine (6) étant disposée dans lesdits espaces libres (1e).

7. Elément de voilure d'aéronef selon la revendication 5,
**caractérisé en ce que** les cellules (5) sont reliées entre elles au niveau de la première couche (1a) d'élastomère, par des ponts de liaison (7) en élastomère faisant partie intégrante de ladite première couche (1a).

8. Elément de voilure d'aéronef selon l'une quelconque des revendications 1 à 7,
**caractérisé en ce que** les cellules (5) présentent une forme hexagonale.

9. Elément de voilure d'aéronef selon l'une quelconque des revendications 1 à 8,
**caractérisé en ce que** des espaces libres (1e) subsistant entre les cellules (5) sont remplies avec une résine (6) polymérisable.

10. Element de voilure d'aéronef selon la revendication 9,
**caractérisé en ce que** le bord d'attaque (3) présente sur sa face intérieure des plots (8) en saillie, engagés dans la résine (6) polymérisable contenue dans des espaces libres (1e).

11. Elëment de voilure d'aéronef selon l'une quelconque des revendications 1 à 10,
**caractérisé en ce que** le bord d'attaque (3) est en une ou en plusieurs parties de manière à recouvrir une zone continue ou des zones discontinues de la voilure.

12. Elément de voilure d'aéronef selon l'une quelconque des revendications 1 à 11,
**caractérisé en ce que** les moyens de fixation du bord d'attaque (3) sont des moyens de collage (9) réalisant une liaison par collage avec les actionneurs piézoélectriques (4a) disposés dans leurs logements (4) respectifs.

13. Elément de voilure d'aéronef selon la revendication 5,
**caractérisé en ce que** le bord d'attaque (3) est collé sur la seconde couche (1b) de la structure en élastomère (1) avec laquelle il est en contact.

14. Elément de voilure d'aéronef selon l'une quelconque des revendications 1 à 13,
**caractérisé en ce que** les actionneurs piézoélectriques sont constituées d'éléments céramiques présentant une forme sensiblement cylindrique du genre disque.

15. Elément de voilure d'aéronef selon l'une quelconque des revendications 1 à 14,
**caractérisé en ce que** des moyens de fixation du bord d'attaque (3) comprennent des éléments de fixation souple (15) solidaires de la structure de base (2) et réalisés avec un matériau du genre néoprène ou silicone, sur lesquels sont fixées par collage les extrémités du bord d'attaque (3), la structure de base (2) présentant au regard du bord d'attaque (3) un dégagement de matière (16) de manière à délimiter un intervalle libre (17) dans lequel sont disposés des actionneurs piézoélectriques (4a).

16. Elément de voilure d'aéronef selon l'une quelconque des revendications 1 à 15,
**caractérisé en ce que** ledit système de dégivrage s'étend également sous au moins une partie de paroi extérieure de la voilure qui est dépourvue de bord d'attaque (3).

17. Elément de voilure d'aéronef selon l'une quelconque des revendications 1 à 16,
**caractérisé en ce que** le câblage (10) est effectué sur la voilure par zones distinctes lorsque le bord d'attaque (3) comporte une partie distincte (a,b,c,d,e) pour chacune des zones

18. Elément de voilure d'aéronef selon l'une quelconque des revendications 1 à 16,
**caractérisé en ce que** le câblage (10) est effectué sur la voilure de façon globale sur une zone unique lorsque le bord d'attaque (3) est en un seul tenant sur ladite zone.

19. Pale (14) de rotor principal pour giravion comportant un élément de voilure conforme à l'une quelconque des revendications 1 à 18.

20. Elément mobile d'une voilure fixe d'aéronef du genre volet comportant un élément de voilure conforme à l'une quelconque des revendications 1 à 18.

## Patentansprüche

1. Element einer feststehenden oder drehbaren Tragfläche eines Luftfahrzeugs mit einem Enteisungssystem, welches Mittel zur Erzeugung von Ultraschall aufweist, der zumindest lokal an eine Außenfläche des Tragflächenelements übertragen wird, das eine Grundstruktur (2) aufweist, die mindestens lokal mit mindestens einer Anströmkante (3) bedeckt ist, wobei die Mittel zur Erzeugung von Ultraschall in in Richtung auf die Anströmkante (3) offenen Gehäusen (4) angeordnet sind, um Ultraschallwellen zu erzeugen, deren Fortpflanzung in mindestens eine Richtung ungefähr parallel zu der Außenfläche erfolgt, wobei eine Verkabelung (10) die Mittel zur Erzeugung von Ultraschall mit einer Einheit zur Steuerung und zur Speisung mit Strom verbindet, wobei Befestigungsmittel die Anströmkante (3) an der Grundstruktur (2) befestigen,
**dadurch gekennzeichnet, dass** die Mittel zur Erzeugung von Ultraschall aus piezoelektrischen Stellgliedern (4a) bestehen, wobei die Befestigungsmittel auf der Grundstruktur (2) eine Haltestruktur (1) für die piezoelektrischen Stellglieder (4a) aufweisen, wobei die Haltestruktur (1) zwischen der Grundstruktur (2) und der Anströmkante (3), die die piezoelektrischen Stellglieder (4a) bedeckt, angeordnet und befestigt ist, wobei die Haltestruktur (1) Zellen (5) aufweist und durchbrochen ist, um Freiräume (1e) zwischen den Zellen (5) aufzuweisen, wobei jede Zelle eines der Gehäuse (4) eingrenzt und wobei die piezoelektrischen Stellglieder (4a) in mindestens einer bestimmten Anzahl von Gehäusen (4) angeordnet sind, wobei die Befestigungsmittel die Anströmkante an den piezoelektrischen Stellgliedern (4a) befestigen, die in ihren jeweiligen Gehäusen (4) angeordnet sind.

2. Tragflächenelement eines Luftfahrzeugs nach Anspruch 1,
**dadurch gekennzeichnet, dass** die Haltestruktur (1) aus einem Elastomer besteht.

3. Tragflächenelement eines Luftfahrzeugs nach Anspruch 1,
**dadurch gekennzeichnet, dass** die Haltestruktur (1) vorgespannt ist, um Kräfte auf die piezoelektrischen Stellglieder (4a) auszuüben.

4. Tragflächenelement eines Luftfahrzeugs nach einem der Ansprüche 1 bis 3,
**dadurch gekennzeichnet, dass** die Haltestruktur (1), die Basisstruktur (2) und die Anströmkante (3) mittels Klebstofffilmen fest miteinander verbunden sind.

5. Tragflächenelement eines Luftfahrzeugs nach Anspruch 2,
**dadurch gekennzeichnet, dass** die Haltestruktur (1) aus Elastomer eine erste durchbrochene Schicht (1a) aufweist, die mit der Basisstruktur (2) über ein polymerisierbares Harz (6) fest verbunden ist, und eine zweite durchbrochene Schicht (1b), die mit der ersten Schicht (1a) über ein Verbindungsmittel vom Typ Klebstofffilm fest verbunden ist, wobei die Gehäuse (4) für die piezoelektrischen Stellglieder (4a) in der zweiten Schicht (1b) vorgesehen sind.

6. Tragflächenelement eines Luftfahrzeugs nach Anspruch 1,
**dadurch gekennzeichnet, dass** die Zellen (5) strukturell unabhängig sind und untereinander über ein polymerisierbares Harz (6) und über die Anströmkante (3) verbunden sind, wobei das Harz (6) in den Freiräumen (1e) angeordnet ist.

7. Tragflächenelement eines Luftfahrzeugs nach Anspruch 5,
**dadurch gekennzeichnet, dass** die Zellen (5) auf der Höhe der ersten Elastomerschicht (1a) über Verbindungsbrücken (7) aus Elastomermaterial, die ein integraler Bestandteil der ersten Schicht (1a) sind, untereinander verbunden sind.

8. Tragflächenelement eines Luftfahrzeugs nach einem der Ansprüche 1 bis 7,
**dadurch gekennzeichnet, dass** die Zellen (5) eine hexagonale Form aufweisen.

9. Tragflächenelement eines Luftfahrzeugs nach einem der Ansprüche 1 bis 8,
**dadurch gekennzeichnet, dass** Freiräume (1e), die zwischen den Zellen (5) noch existieren, mit einem polymerisierbaren Harz (6) aufgefüllt sind.

10. Tragflächenelement eines Luftfahrzeugs nach Anspruch 9,
**dadurch gekennzeichnet, dass** die Vorderkante (3) auf ihrer Innenseite vorstehende Klötze (8) aufweist, die in das polymerisierbare Harz (6), das in Freiräumen (1e) enthalten ist, eingelassen sind.

11. Tragflächenelement eines Luftfahrzeugs nach einem der Ansprüche 1 bis 10,
**dadurch gekennzeichnet, dass** die Anströmkante (3) einteilig oder mehrteilig ist, derart, dass sie einen kontinuierlichen Bereich oder diskontinuierliche Bereiche der Tragfläche bedeckt.

12. Tragflächenelement eines Luftfahrzeugs nach einem der Ansprüche 1 bis 11,
**dadurch gekennzeichnet, dass** die Befestigungsmittel der Anströmkante (3) Klebemittel (9) sind, die eine Verbindung mit den piezoelektrischen Stellgliedern (4a), die in ihren jeweiligen Gehäusen (4) angeordnet sind, durch Verkleben herstellen.

13. Tragflächenelement eines Luftfahrzeugs nach Anspruch 5,
**dadurch gekennzeichnet, dass** die Anströmkante (3) auf der zweiten Schicht (1b) der Struktur aus Elastomer (1), mit der sie in Kontakt steht, geklebt ist.

14. Tragflächenelement eines Luftfahrzeugs nach einem der Ansprüche 1 bis 13,
**dadurch gekennzeichnet, dass** die piezoelektrischen Stellglieder aus keramischen Elementen bestehen, die eine im Wesentlichen zylinderförmige, scheibenförmige Form aufweisen.

15. Tragflächenelement eines Luftfahrzeugs nach einem der Ansprüche 1 bis 14,
**dadurch gekennzeichnet, dass** die Befestigungsmittel der Anströmkante (3) weiche Befestigungselemente (15) aufweisen, die mit der Basisstruktur (2) fest verbunden sind und die aus einem Material vom Typ Neopren oder Silicon hergestellt sind, auf denen durch Verkleben die Enden der Anströmkante (3) befestigt sind, wobei die Basisstruktur (2) gegenüber der Abströmkante (3) eine Materialausnehmung (16) aufweist, derart, dass ein freier Zwischenraum (17) eingegrenzt wird, in dem die piezoelektrischen Stellglieder (4a) angeordnet sind.

16. Tragflächenelement eines Luftfahrzeugs nach einem der Ansprüche 1 bis 15,
**dadurch gekennzeichnet, dass** das Enteisungssystem sich gleichermaßen unter mindestens einem Teil der Außenwand der Tragfläche erstreckt, der nicht die Anströmkante (3) aufweist.

17. Tragflächenelement eines Luftfahrzeugs nach einem der Ansprüche 1 bis 16,
**dadurch gekennzeichnet, dass** die Verkabelung (10) auf der Tragfläche durch verschiedene Bereiche ausgeführt wird, während die Anströmkante (3) einen unterschiedlichen Abschnitt (a, b, c, d, e) für jeden der Bereiche aufweist.

18. Tragflächenelement eines Luftfahrzeugs nach einem der Ansprüche 1 bis 16,
**dadurch gekennzeichnet, dass** die Verkabelung (10) auf der Tragfläche allgemein in einem einzelnen Bereich ausgeführt wird, wenn die Anströmkante (3) in dem Bereich einstückig ist.

19. Rotorblatt (14) eines Hauptrotors für ein Drehflügelflugzeug mit einem Tragflächenelement gemäß einem der Ansprüche 1 bis 18.

20. Mobiles Element einer feststehenden Tragfläche eines Luftfahrzeugs vom Typ einer Klappe mit einem Tragflächenelement gemäß einem der Ansprüche 1 bis 18.

## Claims

1. Fixed or rotary aircraft wing element equipped with a de-icing system comprising means for generating ultrasounds which are transmitted at least locally to an outside surface of the wing element, which element comprises a base structure (2) covered at least locally with at least one leading edge (3), the means for generating ultrasounds being arranged in housings (4) open towards the leading edge (3) in order to generate ultrasound waves which propagate in at least one direction substantially in parallel with the outside surface, wiring (10) connecting the means for generating ultrasounds to an electrical power supply and control unit, fastening means fastening the leading edge (3) to the base structure (2), **characterised in that** said means for generating ultrasounds are constituted by piezoelectric actuators (4a), the fastening means comprising a support structure (1) for the piezoelectric actuators (4a) on the base structure (2), the support structure (1) being arranged and immobilised between the base structure (2) and the leading edge (3) which covers the piezoelectric actuators (4a), the support structure (1) comprising cells (5) and being perforated to comprise empty spaces (1e) between said cells (5), each cell defining a said housing (4) and said piezoelectric actuators (4a) being arranged in at least a certain number of housings (4), said fastening means fastening the leading edge to said piezoelectric actuators (4a) arranged in their respective housings (4).

2. Aircraft wing element according to claim 1,
**characterised in that** the support structure (1) is made of an elastomer.

3. Aircraft wing element according to claim 1,
**characterised in that** the support structure (1) is prestressed to exert forces on the piezoelectric actuators (4a).

4. Aircraft wing element according to any one of claims 1 to 3,
**characterised in that** the support structure (1), the base structure (2) and the leading edge (3) are secured to one another using films of adhesive.

5. Aircraft wing element according to claim 2,
**characterised in that** the elastomer support structure (1) comprises a perforated first layer (1a) secured to the base structure (2) by means of a polymerisable resin (6) and a perforated second layer (1b) secured to the first layer (1a) by a connection means of the adhesive film type, the housings (4) for the piezoelectric actuators (4a) being provided in said second layer (1b).

6. Aircraft wing element according to claim 1,
**characterised in that** the cells (5) are structurally independent and connected to one another by a polymerisable resin (6) and by the leading edge (3), said resin (6) being arranged in said empty spaces (1e).

7. Aircraft wing element according to claim 5,
**characterised in that** the cells (5) are connected to one another at the first elastomer layer (1a) by elastomer connecting bridges (7) forming an integral part of said first layer (1a).

8. Aircraft wing element according to any one of claims 1 to 7,
**characterised in that** the cells (5) have a hexagonal shape.

9. Aircraft wing element according to any one of claims 1 to 8,
**characterised in that** empty spaces (1e) remaining between the cells (5) are filled with a polymerisable resin (6).

10. Aircraft wing element according to claim 9,
**characterised in that** the leading edge (3) has projecting studs (8) on its inside face, which studs are engaged in the polymerisable resin (6) contained in empty spaces (1e).

11. Aircraft wing element according to any one of claims 1 to 10,
**characterised in that** the leading edge (3) is in one or more portions so as to cover a continuous zone or discontinuous zones of the wing.

12. Aircraft wing element according to any one of claims 1 to 11,
**characterised in that** the means for fastening the leading edge (3) are adhesive bonding means (9) providing a connection by adhesive bonding with the piezoelectric actuators (4a) arranged in their respective housings (4).

13. Aircraft wing element according to claim 5,
**characterised in that** the leading edge (3) is adhesively bonded to the second layer (1b) of the elastomer structure (1) with which it is in contact.

14. Aircraft wing element according to any one of claims 1 to 13,
**characterised in that** the piezoelectric actuators are constituted by disc-like ceramic elements having a substantially cylindrical shape.

15. Aircraft wing element according to any one of claims 1 to 14,
**characterised in that** means for fastening the leading edge (3) comprise flexible fastening elements (15) secured to the base structure (2) and made of a material of the neoprene or silicone type, to which the ends of the leading edge (3) are fastened by adhesive bonding, the base structure (2) having with regard to the leading edge (3) a material relief (16) so as to define an empty gap (17) in which piezoelectric actuators (4a) are arranged.

16. Aircraft wing element according to any one of claims 1 to 15,
**characterised in that** said de-icing system also extends under at least an outside wall portion of the wing which does not have the leading edge (3).

17. Aircraft wing element according to any one of claims 1 to 16,
**characterised in that** the wiring (10) is carried out on the wing in distinct zones when the leading edge (3) comprises a distinct portion (a,b,c,d,e) for each of the zones.

18. Aircraft wing element according to any one of claims 1 to 16,
**characterised in that** the wiring (10) is carried out on the wing overall in a single zone when the leading edge (3) is a single piece over said zone.

19. Main rotor blade (14) for rotorcraft comprising a wing element in accordance with any one of claims 1 to 18.

20. Movable element of an aircraft fixed wing of the flap type, comprising a wing element in accordance with any one of claims 1 to 18.
